(19) Europäisches Patentamt
European Patent Office
Office européen des brevets

(11) Veröffentlichungsnummer: **0 250 954**
**B1**

(12) **EUROPÄISCHE PATENTSCHRIFT**

(45) Veröffentlichungstag der Patentschrift: **20.09.89**

(51) Int. Cl.⁴: **G03C 5/54**
// C09B55/00

(21) Anmeldenummer: **87108348.1**

(22) Anmeldetag: **10.06.87**

(54) **Farbfotografisches Aufzeichnungsmaterial mit einem Farbabspalter für blaugrüne Farbstoffe und ein mit diesen Farbstoffen erzeugtes Farbbild.**

(30) Priorität: **21.06.86 DE 3620824**

(43) Veröffentlichungstag der Anmeldung: **07.01.88 Patentblatt 88/1**

(45) Bekanntmachung des Hinweises auf die Patenterteilung: **20.09.89 Patentblatt 89/38**

(84) Benannte Vertragsstaaten: **BE DE FR GB**

(56) Entgegenhaltungen:
**EP-A- 0 106 211**
**DE-A- 3 529 439**

(73) Patentinhaber: **Agfa-Gevaert AG, D-5090 Leverkusen 1(DE)**

(72) Erfinder: **Boie, Immo, Dr., Matthäusstrasse 35, D-5216 Niederkassel(DE)**
Erfinder: **Vetter, Hans, Dr., Gerstenkamp 19, D-5000 Köln 80(DE)**
Erfinder: **Wingender, Kaspar, Rüttersweg 53, D-5090 Leverkusen 1(DE)**

**EP 0 250 954 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft ein farbfotografisches Aufzeichnungsmaterial für die Herstellung farbiger Bilder nach dem Farbdiffusionsübertragungsverfahren, das zugeordnet zu mindestens einer lichtempfindlichen Silberhalogenidemulsionsschicht eine nicht diffundierende farbgebende Verbindung (Farbabspalter) enthält, aus der bei der Entwicklung ein diffusionsfähiger blaugrüner Farbstoff freigesetzt wird.

Das Farbdiffusionsverfahren beruht darauf, daß bei der Entwicklung in einem lichtempfindlichen Element nach Maßgabe einer vorangegangenen Belichtung eine bildmäßige Verteilung diffusionsfähiger Farbstoffe erzeugt und auf ein Bildempfangselement übertragen wird.

Sehr wichtig ist hierbei, daß die Farbstoffe in der Bildempfangsschicht in ausreichendem Maße festgelegt werden können und daß sie außerdem augezeichnete spektrale Eigen schaften und hervorragende Stabilität gegen Licht und Wärme aufweisen.

Blaugrüne Farbstoffe für das Farbdiffusionsverfahren, die als Chromophor einen Phthalocyaninrest - bevorzugt in Form des Kupferkomplexes - enthalten, sind z.B. aus DE-A-31 01 036 bekannt.

Nachteilig an den an sich außerordentlich stabilen Farbstoffen ist ihre gegenüber den üblicherweise verwendeten Gelb- und Purpurfarbstoffen verminderte Diffusionsfähigkeit. Dies hat zur Folge, daß der Aufbau des Farbübertrages während der Übertragszeit mit einem Farbgang von rot nach neutral verbunden ist und eine genaue Einhaltung der optimalen Übertragszeit erfordert.

Schnell diffundierende blaugrüne Farbstoffe für das Farbdiffusionsverhalten sind in der Reihe der 4-(4-Nitrophenylazo)-1-naphthole beschrieben worden, z.B. in DE-A-24 06 653 und DE-A-28 53 584.

Die in DE-A-24 06 653 genannten Farbstoffe liegen nach der Abspaltung vom diffusionsfestmachenden Trägerrest in Form eines anionischen Chromophors vor, diffundieren so in die Bildempfangsschicht und werden auch auf dem Beizmittel in der Form des Farbstoffanions festgelegt. Anionische Farbstoffe zeigen allgemein geringe Lichtechtheiten. Es überrascht daher nicht, daß die blaugrünen anionischen Farbstoffe aus der Reihe der 4-(4-Nitrophenylazo)-naphthole eine unbefriedigende Lichtechtheit aufweisen. Zur Behebung dieses Nachteils sind bereits in DE-A-28 53 584 Farbstoffe aus der gleichen Klasse beschrieben, die durch eine zu sätzliche Carbamoylsubstitution in ortho-Stellung zur OH-Gruppe bessere Lichtechtheiten aufweisen. Die lichtstabileren Farbstoffe weisen aber vielfach eine zu kurzwellige Absorption, eine zu breite Absorption und/oder eine zu hohe Nebenabsorption auf, was allgemein die Farbwiedergabe verschlechtert.

Diesen Farbstoffen ist ferner gemeinsam, daß sie aufgrund der Anwesenheit einer Nitrogruppe in para-Position zur Azogruppe gegen Angriff durch Reduktionsmittel labilisiert sind. Reduktionsmittel sind jedoch, ganz abgesehen von den Entwicklersubstanzen, in praktisch allen Aufzeichnungsmaterialien für das Farbdiffusionsübertragungsverfahren zur Übernahme bestimmter Funktionen vorhanden. Zum Beispiel enthalten die Zwischenschichten zwischen den einzelnen einer bestimmten Teilfarbe zugeordneten Schichtpaketen üblicherweise Reduktionsmittel, insbesondere solche aus der Reihe der mono- oder dialkylierten Hydrochinone, die zum Abfangen von Entwickleroxidationsprodukten befähigt und dementsprechend reaktiv sind.

Ebenso enthalten Aufzeichnungsmaterialien, die reduzierbare Farbabspalter enthalten, in Zuordnung zu diesen sogenannten Elektronendonor-Verbindungen (ED-Verbindungen) oder deren Vorläufer. Zur Erläuterung ist in diesem Zusammenhang auf folgende Anmeldungen zu verweisen: EP-A- 0 004 399, US-A-4 139 379, US-A-4 278 750, DE-A-30 14 669, EP-A-0 038 092, DE-A-30 08 588 und DE-A-30 06 268.

Es ist bekannt, daß 4-Nitrophenylazofarbstoffe leichter als andere Monoazofarbstoffe durch Reduktionsmittel angegriffen werden. Schon der kurze Kontakt zwischen Reduktionsmittel und Chromophor während der Bildentstehungszeit kann bei Gegenwart eines stark alkalischen Verarbeitungsmediums ausreichen, den blaugrünen Farbstoff zu kürzerwellig absorbierenden Verbindungen unbekannter Struktur zu verändern, so daß seine Nuance von Blaugrün zu Blau oder sogar Violett verändert wird.

Es ist daher wünschenswert, für das Farbdiffusionsverfahren leichtdiffundierende blaugrüne Farbstoffe bereitzustellen, die keine 4-Nitrophenylazogruppe enthalten und daher weniger reduktionsempfindlich sind.

Die Lichtechtheit von Farbstoffen insbesondere Azofarbstoffen kann vielfach auch durch Komplexbildung mit mehrwertigen Metallionen gesteigert werden. Wenn diese Komplexbildung nachträglich, d.h. nach Freisetzung der Farbstoffe, aus dem Farbabspalter, durchgeführt wird, läßt sich nicht immer eine unerwünschte Anfärbung des Aufzeichnungsmaterials bzw. der Bildempfangsschicht durch freie Metallionen vermeiden.

Auch die aus der chromogenen Farbfotografie bekannten Indoanilinfarbstoffe sind bereits in diffusionsfähiger Form als Blaugrünfarbstoffe für Farbdiffusionsverfahren bechrieben worden.

Sie werden beispielsweise beschrieben in US-A 3 227 550, z.B. die Kuppler XXIII und XXVIII. Nachteilig daran ist, daß der für die Entwicklung erforderliche überschüssige Farbentwickler nicht entfernt wird und bei der Lagerung des Bildes durch Braunfärbung die Weißen verdirbt. Im übrigen sind auch die bekannten Blaugrünfarbstoffe dieses Typs nicht ausreichend lichtstabil.

Weiterhin können die Indoanilinfarbstoffe auch durch Oxidation aus entsprechenden Leukofarbstoffen hergestellt werden, ohne daß hierzu Farbentwickler erforderlich sind. Die Oxidation wird beispielsweise bewirkt durch Reaktion der Leukofarbstoffe mit den Oxidationsprodukten eines Hilfsentwicklers.

Wegen der Oxidationsempfindlichkeit der Leukofarbstoffe weisen derartige fotografische Aufzeichnungsmaterialien eine beträchtliche Neigung auf, Farbschleier zu bilden.

Außerdem wird im Farbdiffusionsverfahren zusätzliches Silberhalogenid erforderlich um nicht nur bildmäßige Farbstoffmobilität sondern auch die Oxidation des Leukofarbstoffes zu bewirken.

Die Verwendung von Azomethin- bzw. Indoanilinfarbstoffen im Farbdiffusionsverfahren, wie beispielsweise beschrieben in EP-A 0 106 211 und DE-A 3 529 439, wird darüber hinaus erschwert, weil die Farbstoffe bei den für die Farbstofffreisetzung und -diffusion erforderlichen hohen pH-Werten leicht hydrolytisch zerstört werden, wodurch schwächere und verschwärzlichte Farben erhalten werden.

Der Erfindung liegt die Aufgabe zugrunde, neue farbgebende Verbindungen für das Farbdiffusionsübertragsverfahren anzugeben, aus denen bei der fotografischen Entwicklung diffundierende blaugrüne Farbstoffe in Freiheit gesetzt werden, die eine verbesserte Lichtechtheit, verbesserte spektrale Eigenschaften und verbesserte Beständigkeit gegen Alkali und Reduktionsmittel aufweisen.

Gegenstand der Erfindung ist ein farbfotografisches Aufzeichnungsmaterial für die Herstellung farbiger Bilder nach dem Farbdiffusionsübertragungsverfahren, das zugeordnet zu mindestens einer lichtempfindlichen Silberhalogendemulsionsschicht eine nicht diffundierende farbgebende Verbindung (Farbabspalter) enthält, aus der unter den Bedingungen der alkalischen Entwicklung als Funktion der Entwicklung der Silberhalogenidemulsionsschicht ein diffusionsfähiger Blaugrünfarbstoff freigesetzt wird, dadurch gekennzeichnet, daß der Blaugrünfarbstoff der folgenden Formel I entspricht:

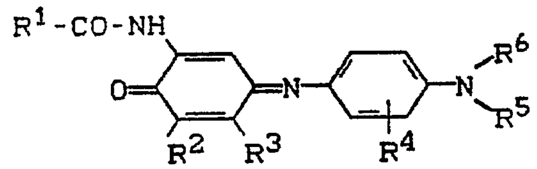

I

worin bedeuten

$R^1$ Alkyl, Aryl, Arylamino, Alkoxy, Aryloxy;
$R^2$ H, Halogen;
$R^3$ Alkyl mit 2-4 C-Atomen;
$R^4$ H oder einen oder mehrere Substituenten wie Alkyl, Alkoxy, Acylamino, Halogen, einschließlich eines Substituenten in ortho-Stellung zur Gruppe

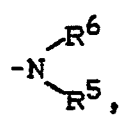

der zusammen mit $R^5$ eine cyclische Aminogruppe vervollständigt;
$R^5$ Alkyl mit bis zu 4 C-Atomen, oder einen Rest, der zusammen mit einem durch $R^4$ dargestellten Substituenten oderzusammen mit $R^6$ eine cyclische Aminogruppe vervollständigt
$R^6$ Alkyl mit bis zu 4 C-Atomen, oder einen Rest, der zusammen mit $R^5$ eine cyclische Aminogruppe vervollständigt.

Eine durch $R^1$, $R^4$, $R^5$, oder $R^6$ dargestellte oder in den durch $R^4$ dargestellten Alkoxy- oder Acylaminosubstituenten enthaltene Alkylgruppe enthält vorzugweise 1-4 C-Atome. Sie kann geradkettig oder verzweigt sein und weiter substituiert sein, z.B. durch Halogen, Hydroxy, Alkoxy, Aroxy oder Acylamino. Die durch $R^3$ dargestellte Alkylgruppe ist vorzugsweise Ethyl oder Isopropyl.

Eine durch $R^1$ dargestellte Aryl- oder Arylaminogruppe ist vorzugsweise eine Phenyl- oder Anilinogruppe, die durch Halogen, CN, Alkyl, Alkoxy, Alkylsulfonyl, Alkylsulfamoyl substituiert sein kann.

Bei der in der Definition von $R^4$, $R^5$ und $R^6$ erwähnten cyclischen Aminogruppe handelt es sich um eine 5-, 6- oder 7-gliedrige cyclische Aminogruppe, die, falls sie durch $R^4$ und $R^5$ gebildet, ist, an einen Benzolring ankondensiert ist. Beispiele sind die Pyrrolidin-, Piperidin-, Morpholin- und Indoleningruppe.

Ein Acylrest (Acylamino) leitet sich vorzugsweise von aliphatischen Carbon- oder Sulfonsäuren mit bis zu 4 C-Atomen ab.

Weiterhin verfügen die Farbstoffe der Formel I, z.B. in Form der als Substituent genannten Gruppen oder in Form von Substituenten, die gegebenenfalls über ein geeignetes Bindeglied an eine dieser Gruppen gebunden sind, über geeignete funktionelle Gruppen zur Einstellung eines günstigen Diffusions- und Beizverhaltens, z.B. über anionische oder anionisierbare Gruppen, wie Sulfonat-, Sulfinat-, Phenolat-, Naphtholat-, Carboxylat-, Disulfimid- oder Sulfamoylgruppen, sowie über eine funktionelle Gruppe, die aus der Aufspaltung einer Bindung an einen mit einer Ballastgruppe versehenen Trägerrest resultiert und für die Art des Trägerrestes und die Anknüpfung daran charakteristisch ist. Die zuletzt genannte funktionelle Gruppe kann identisch sein mit einer der zuvor genannten das Diffusions- und Beizverhalten modifizierenden Gruppen. Die erwähnte funktionelle Gruppe kann beispielsweise an einen Alkyl- oder Arylrest gebunden sein, der seinerseits Bestandteil einer der erwähnten Gruppen und vorzugsweise Bestandteil von $R^1$ ist.

Die Formel I bezieht sich auf die erfindungsgemäßen gegebenenfalls bei der Entwicklung freigesetzten diffusionsfähigen Farbstoffe. Diese werden beispielsweise freigesetzt aus entsprechenden eingelagerten nichtdiffundierenden farbgebenden Vebindungen (Farbabspalter). Hierbei handelt es sich um Verbindungen, in denen beispielsweise ein Farbstoffrest gemäß Formel I an einen mindestens eine Ballastgruppe enthaltenden Trägerrest CAR gebunden ist, gegebenenfalls unter Zwischenschaltung eines geeigneten Bindegliedes.

Die Anknüpfung des Farbstoffes der Formel I an den Trägerrest kann beispielsweise über einen der Substituenten $R^1$-$R^6$ erfolgen. Die erfindungsgemäßen Farbabspalter lassen sich dementsprechend beispielsweise durch die folgende Formel II darstellen

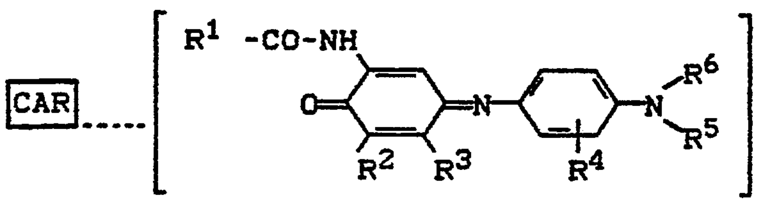

II

worin
$R^1$ - $R^6$ die bereits angegebene Bedeutung haben,
CAR einen mindestens eine diffusionsfestmachende Gruppe enthaltenden Trägerrest bedeutet,
und die gestrichelte Linie eine mögliche Verknüpfung kennzeichnet. In den erfindungsgemäßen Farbabspaltern der Formel II ist somit der Trägerrest als Substituent in einer der Gruppe $R^1$-$R^6$, vorzugsweise $R^1$ oder $R^6$ enthalten.

Der durch CAR dargestellte Trägerrest weist außer einem Ballastrest mindestens eine Gruppierung auf, die als Funktion der Entwicklung einer Silberhalogenidemulsionsschicht spaltbar ist, so daß der an den Trägerrest gebundene Farbstoff gegebenenfalls zusammen mit einem kleinen Bruchstück des ursprünglichen Trägerrestes von dem Ballastrest abgetrennt und somit aus der Verankerung in der Schicht gelöst werden kann. Je nach der Funktionsweise der spaltbaren Gruppierung können die Trägerreste unterschiedliche Strukturen aufweisen.

Bei den erfindungsgemäßen Farbabspaltern kann es sich um eine Vielfalt von Verbindungstypen handeln, die sich sämtlich durch ein in seiner Bindungsfestigkeit redoxabhängiges Bindeglied auszeichnen, welches einen Farbstoffrest mit einem einen Ballastrest enthaltenden Trägerrest verknüpft.

In diesem Zusammenhang ist auf eine zusammenfassende Darstellung des Sachgebiets in Angew. Chem. Int. Ed. Engl. 22 (1983), 191 - 209 zu verweisen, in der die wichtigsten der bekannten Systeme beschrieben sind.

Als besonders vorteilhaft erweisen sich hierbei redoxaktive Farbabspalter der Formel
BALLAST - REDOX - FARBSTOFF,
worin bedeuten
BALLAST einen Ballastrest
REDOX eine redoxaktive Gruppe, d.h. eine Gruppe die unter den Bedingungen der alkalischen Entwicklung oxidierbar oder reduzierbar ist und je nachdem, ob sie im oxidierten oder im reduzierten Zustand vorliegt, in unterschiedlichem Ausmaß einer Eliminierungsreaktion, einer nukleophilen Verdrängungsreaktion, einer Hydrolyse oder einer sonstigen Spaltungsreaktion unterliegt mit der Folge, daß der Rest FARBSTOFF abgespalten wird, und
FARBSTOFF den Rest eines diffusionsfähigen Farbstoffes, im vorliegenden Fall eines Farbstoffes gemäß Formel I.

Als Ballastreste sind solche Reste anzusehen, die es ermöglichen, die erfindungsgemäßen Farbabspalter in den üblicherweise bei fotografischen Materialien verwendeten hydrophilen Kolloiden diffusionsfest einzulagern. Hierzu sind vorzugsweise organische Reste geeignet, die im allgemeinen geradkettige oder verzweigte aliphatische Gruppen mit im allgemeinen 8 bis 20 C-Atomen und gegebenenfalls auch carbocyclische oder heterocyclische gegebenenfalls aromatische Gruppen enthalten. Mit dem übrigen Molekülteil sind diese Reste entweder direkt oder indirekt, z.B. über eine der folgenden Gruppen verbunden: -NHCO-, $NHSO_2$-, -NR-, wobei R Wasserstoff oder Alkyl bedeutet, -O- oder -S-. Zusätzlich kann der Ballastrest auch wasserlöslichmachende Gruppen enthalten, wie z.B. Sulfogruppen oder Carboxylgruppen, die auch in anionischer Form vorliegen können. Da die Diffusionseigenschaften von der Molekülgröße der verwendeten Gesamtverbindung abhängen, genügt es in bestimmten Fällen, z.B. wenn das verwendete Gesamtmolekül groß genug ist, als Ballastreste auch kürzerkettige Reste zu verwenden.

Redoxaktive Trägerreste der Struktur BALLAST-REDOX- und entsprechende Farbabspalter sind in den verschiedensten Ausführungsformen bekannt. Auf eine detaillierte Darstellung kann an dieser

Stelle verzichtet werden im Hinblick auf den genannten Übersichtartikel im Angew. Chem. Int. Ed. Engl. 22 (1983) 191-209.

Lediglich zur Erläuterung sind im folgenden einige Beispiele für redoxaktive Trägerreste aufgeführt, von denen ein Farbstoffrest nach Maßgabe einer bildmäßig stattgefundenen Oxidation oder Reduktion abgespalten wird:

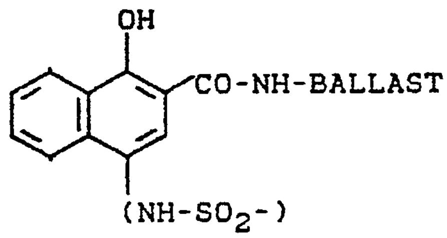

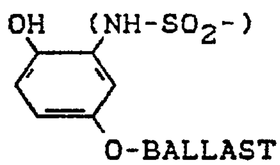

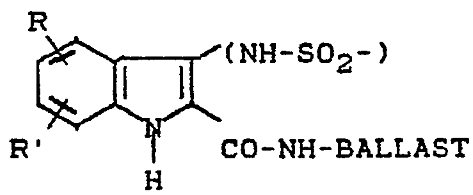

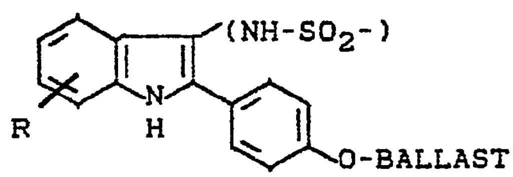

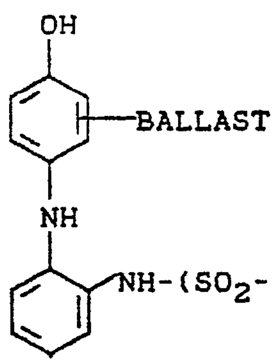

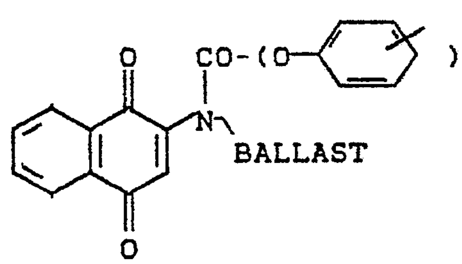

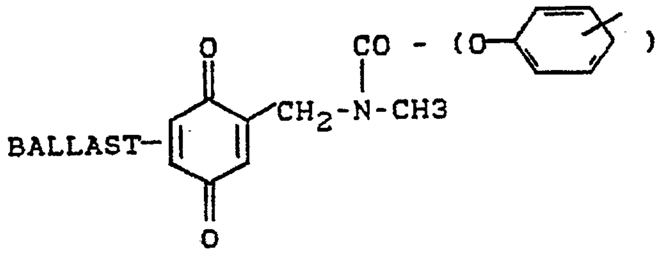

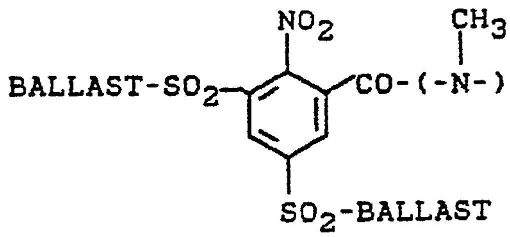

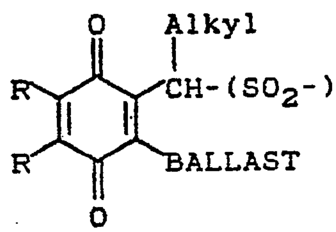

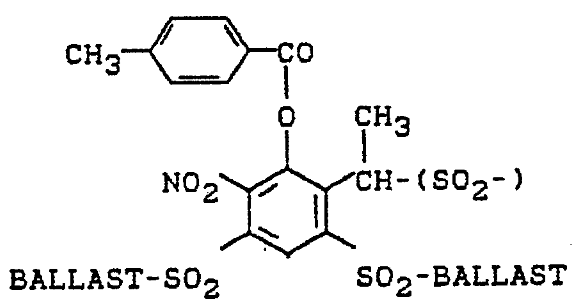

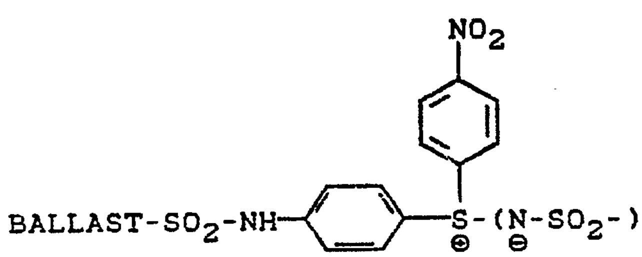

Die in Klammern eingeschlossenen Gruppen sind funktionelle Gruppen des Farbstoffrestes und werden zusammen mit diesem vom zurückbleibenden Teil des Trägerrestes abgetrennt. Bei der funktionellen Gruppe kann es sich um einen der Substituenten handeln, die bei der Erläuterung der Reste $R^1$ bis $R^6$ in den Formeln I und II erwähnt worden sind und die einen unmittelbaren Einfluß auf die Absorptionseigenschaften des freigesetzten Farbstoffes ausüben können. Die funktionelle Gruppe kann andererseits aber auch von dem Chromophor des Farbstoffes durch ein Zwischenglied oder Verknüpfungsglied getrennt sein, indem sie sich als Substituent in einer der für $R^1$ bis $R^6$ definierten Gruppen befindet, ohne daß hierdurch eine Einfluß auf die Absorptionseigenschaften wirksam werden müßte. Die funktionelle

Gruppe kann schließlich auch gegebenenfalls zusammen mit dem Zwischenglied von Bedeutung sein für das Diffusions-, Beiz- und Stabilitätsverhalten des frei gesetzten Farbstoffes. Geeignete Zwischenglieder sind beispielsweise Alkylen-oder Arylengruppen.

Geeignete Farbabspalter sind beispielsweise beschrieben in:
US-A- 3 227 550, US-A- 3 443 939, USA-A- 3 443 940, DE-A- 19 30 215, DE-A- 22 42 762, DE-A- 24 02 900, DE-A- 24 06 664, DE-A- 25 05 248, DE-A- 25 43 902, DE-A- 26 13 005, DE-A- 26 45 656, DE-A- 28 09 716, DE-A- 28 23 159, BE-A- 861 241, EP-A- 0 004 399, EP-A- 0 004 400, DE-A- 30 08 588, DE-A- 30 14 669, EP-A- 0 038 092.

Die Farbabspalter können in manchen Ausführungsformen des erfindungsgemäßen Aufzeichnungsmaterials als oxidierbare oder kupplungsfähige Farbabspalter, in anderen als reduzierbare Farbabspalter vorliegen. Je nachdem, ob der Farbstoff aus der oxidierten oder aus der reduzierten Form der Farbabspalter freigesetzt wird, erhält man bei Verwendung üblicher negativ arbeitender Silberhalogenidemulsionen von der Vorlage eine negative oder positive Ablichtung. Man kann daher nach Wunsch durch Auswahl geeigneter Farbabspaltersysteme positive oder negative Bilder herstellen.

Für die Erzeugung positiver Farbbilder von positiven Vorlagen (Original) bei Verwendung negativ arbeitender Silberhalogenidemulsionen eignet sich beispielsweise ein erfindungsgemäßes Aufzeichnungsmaterial, das reduzierbare Farbabspalter mit einem Trägerrest der folgenden Formel enthält:

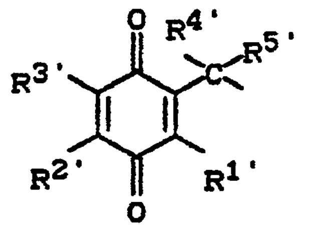

"Carquin"

worin bedeuten

$R^{1'}$ Alkyl oder Aryl;
$R^{2'}$ Alkyl, Aryl oder eine Gruppierung, die zusammen mit $R^{3'}$ einen ankondensierten Ring vervollständigt;
$R^{3'}$ Wasserstoff, Alkyl, Aryl, Hydroxyl, Halogen wie Chlor oder Brom, Amino, Alkylamino, Dialkylamino einschließlich cyclischer Aminogruppen (wie Piperidino, Morpholino), Acylamino, Alkylthio, Alkoxy, Aroxy, Sulfo, oder eine Gruppierung, die zusammen mit $R^{2'}$ einen ankondensierten Ring vervollständigt;
$R^{4'}$ Alkyl;
$R^{5'}$ Alkyl oder vorzugsweise Wasserstoff,
und wobei mindestens einer der Reste $R^{1'}$ bis $R^{4'}$ einen Ballastrest enthält.

Die Herstellung der erfindungsgemäßen Indoanilinfarbstoffe der Formel I bzw. der Farbabspalter der Formel II erfolgt üblicherweise durch eine Mehrzahl von Schritten, von denen einer die Verknüpfung mit dem diffusionsfest machenden Trägerrest, ein anderer den Aufbau des Chromophors betrifft.

Der Chromophor wird in der Regel durch chromogene Kupplung erzeugt, wobei übliche Farbentwicklerverbindungen in Gegenwart eines Oxidationsmittels mit einer Verbindung der folgenden Formel III umgesetzt werden:

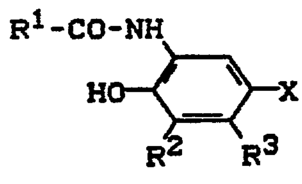

III

worin $R^1$, $R^2$ und $R^3$ die angegebene Bedeutung haben und worin X für Wasserstoff oder eine bei dieser Reaktion abspaltbare Gruppe, z.B. Halogen, Alkoxy oder Alkylthio steht.

Die Verknüpfung mit dem Trägerrest kann nach im Grunde bekannten Methoden durchgeführt werden und zwar bevor oder auch nachdem der Chromophor gebildet wird.

Dabei kann die Verknüpfung sowohl über den Kupplerrest wie auch über den Farbentwicklerrest erfolgen, sofern sie entsprechende Funktionen zur Umsetzung mit dem Trägerrest tragen. Solche Funktionen sind natürlich abhängig von der Gruppe des Trägerrests, die mit einer solchen Funktion in Reaktion treten soll. Dies können z.B. Aminogruppen, Hydroxygruppen, Sulfonsäurechloridgruppen, Sulfinsäuregruppen, Carbonsäuregruppen, Carbonsäurechloridgruppen u.a. sein.

Im folgenden werden Beispiele für Blaugrünfarbstoffe (C-) gemäß der Erfindung aufgeführt. Bei den durch ein Sternchen (*) gekennzeichneten Verbindungen handelt es sich um Modellfarbstoffe, die zwar hinsichtlich des Substitutionsmusters am chromophoren System mit den aus den erfindungsgemäßen

Farbabspaltern freigesetzten Farbstoffen übereinstimmen, aber nicht deren spezielle aus der Freisetzungsreaktion resultierende funktionelle Gruppe, z.B. eine Sulfinsäure, aufweisen.

C-1

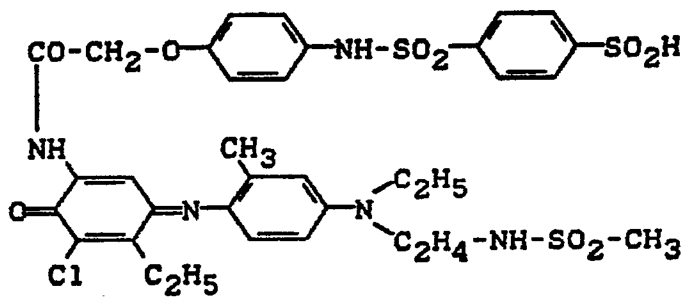

C-2 (*)

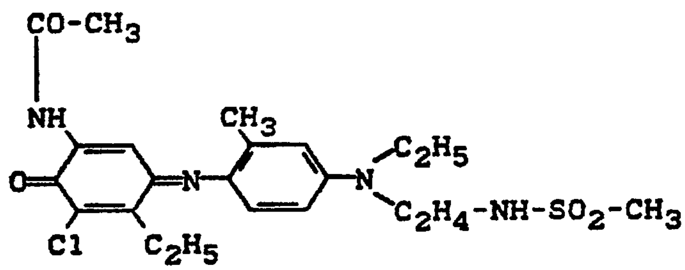

C-3

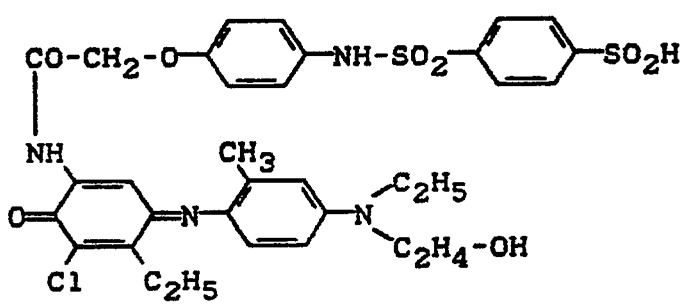

C-4

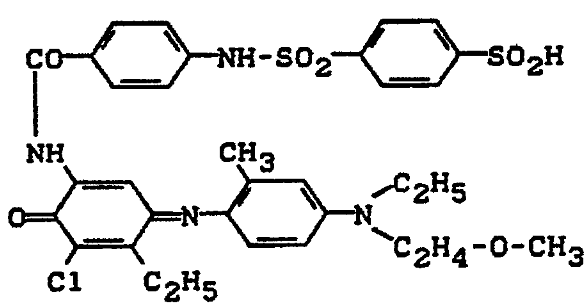

C-5

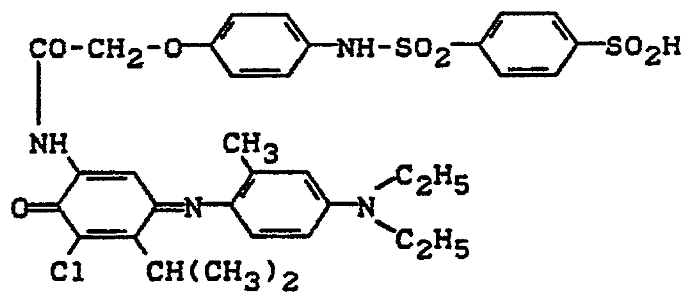

C-6

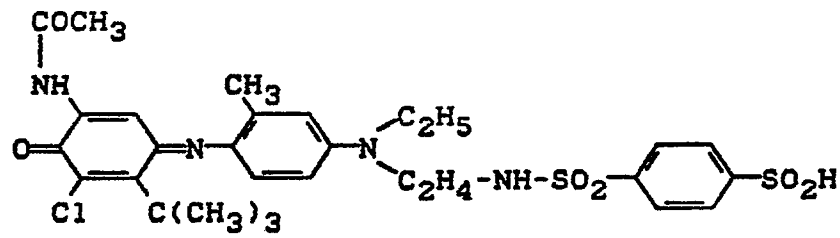

C-7

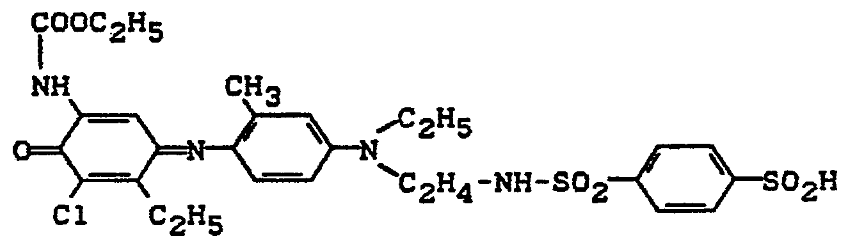

C-8

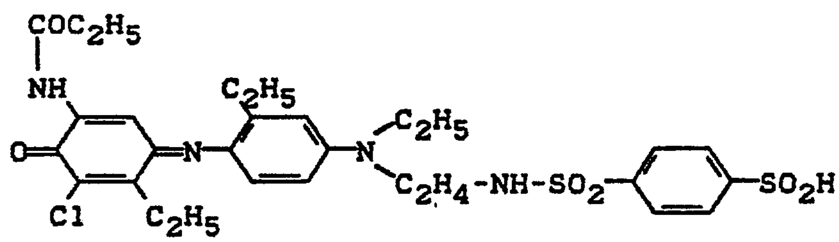

C-9

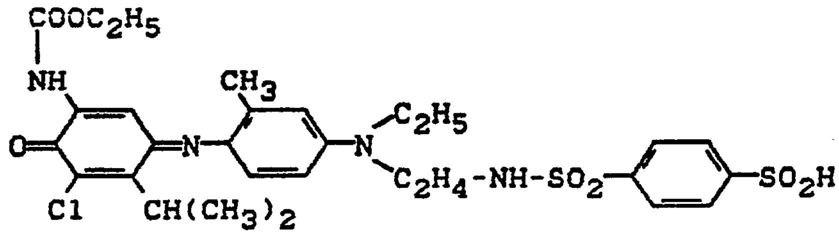

C-10

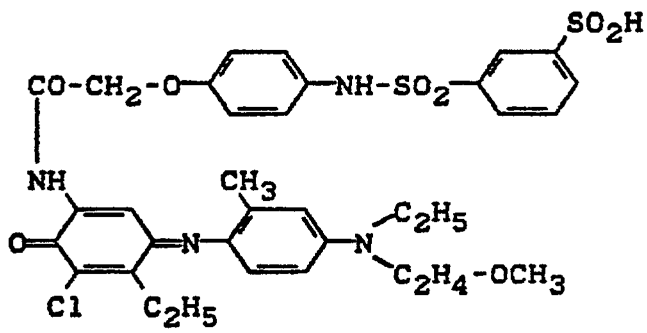

C-11

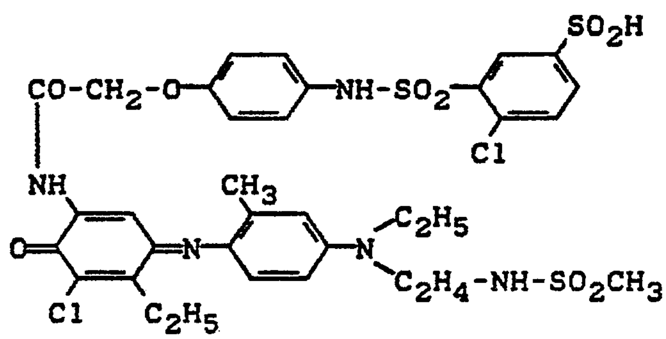

C-12

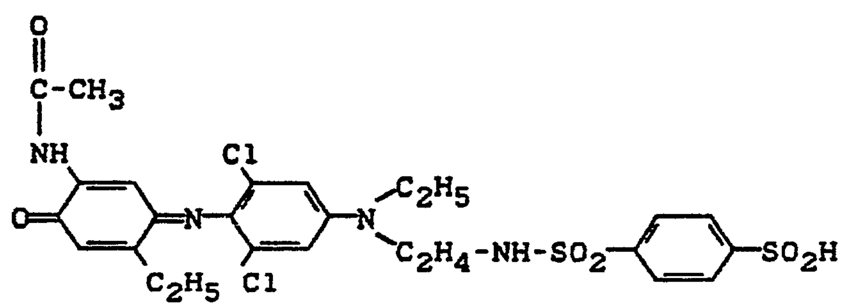

Erfindungsgemäße Farbabspalter (FA-) sind im folgenden angegeben:

FA-1

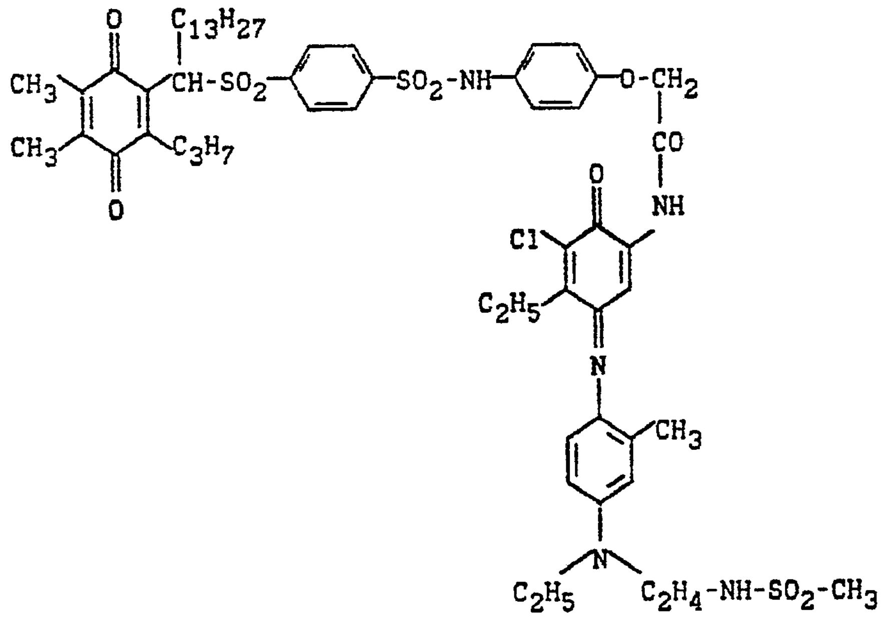

FA-2

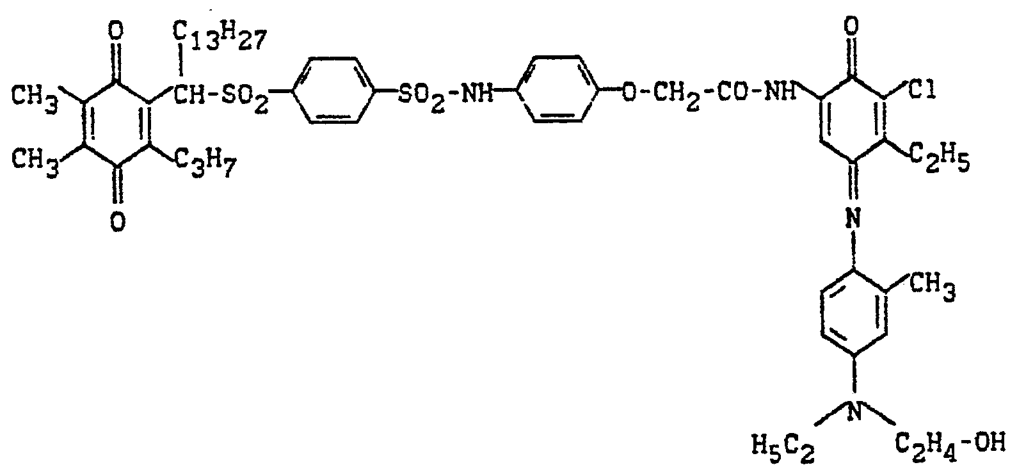

FA-3

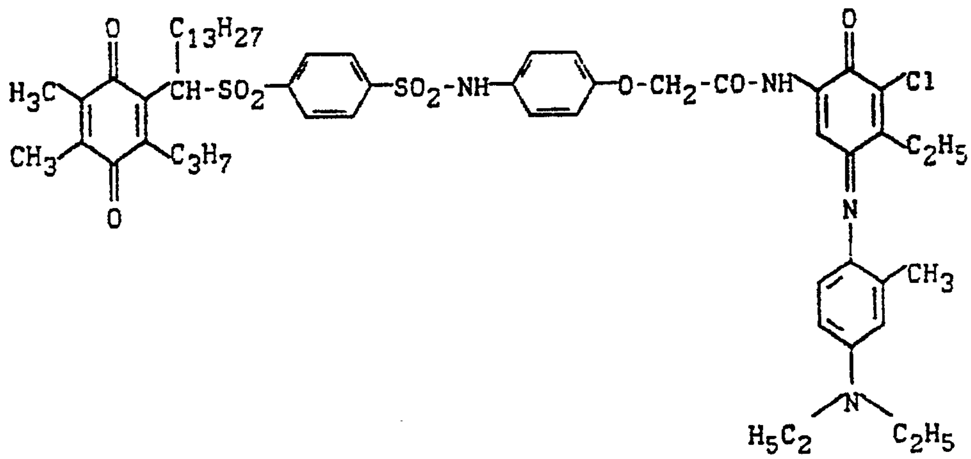

FA-4

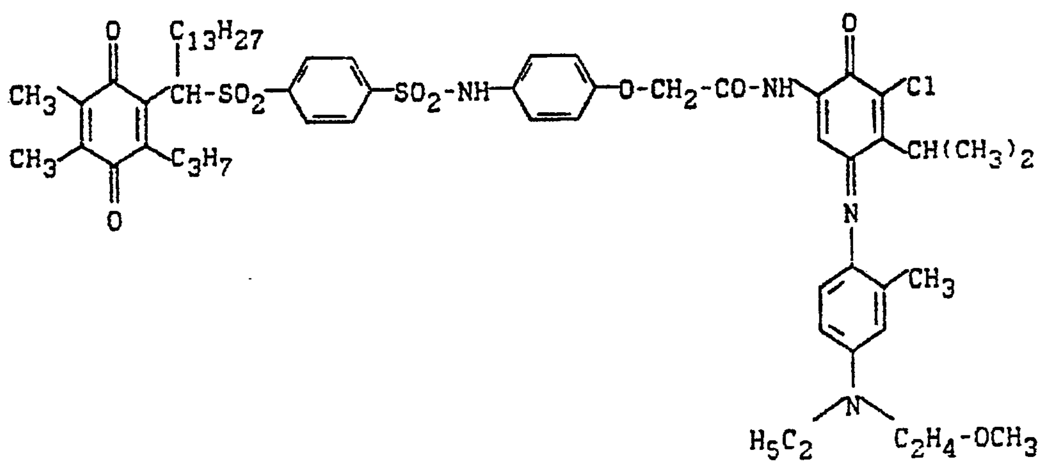

FA-5

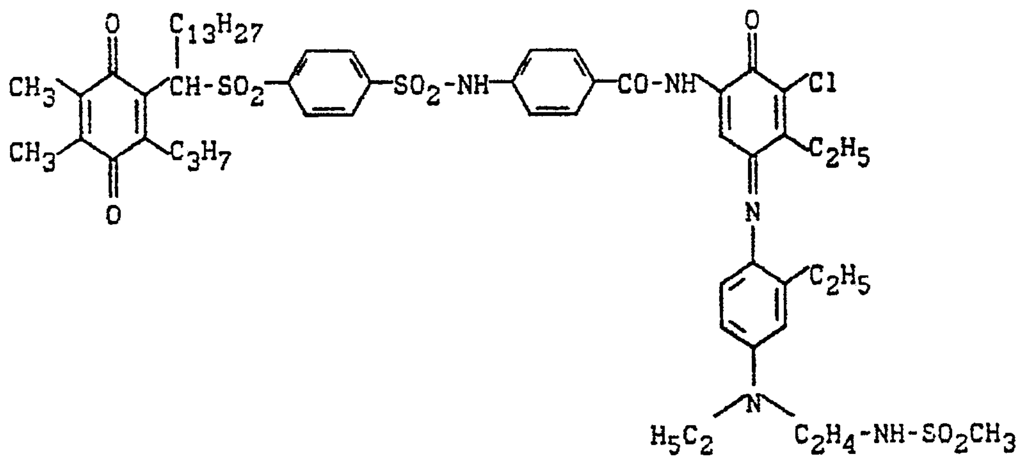

FA-6

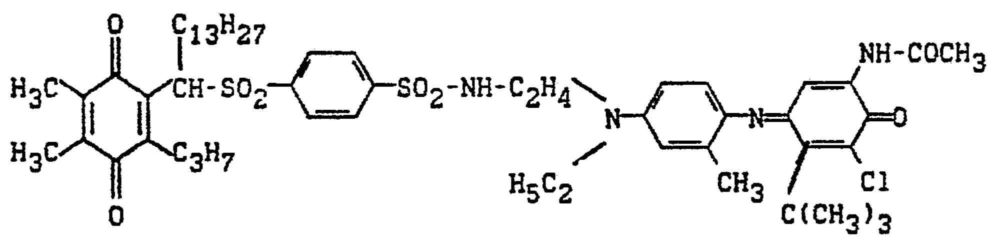

FA-7

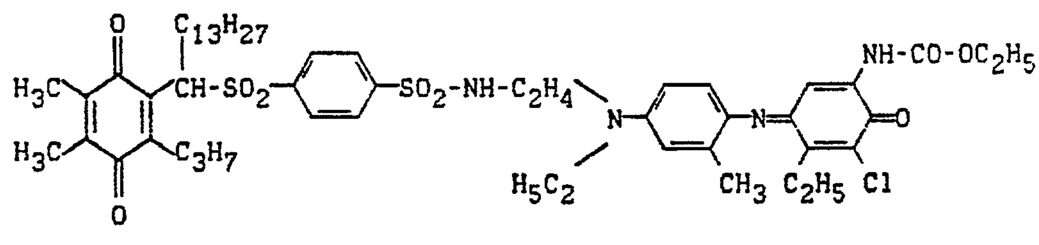

Die Synthese der erfindungsgemäßen Farbabspalter ist im folgenden beispielhaft erläutert:

a.) 4-Nitrophenoxyacetyl-(2-hydroxy-3,5-dichlor-4-ethylanilid)
41,2 g (0,2 mol) 2-Hydroxy-3,5-dichlor-4-ethylanilin wurden in 250 ml Aceton und 24,3 ml Pyridin gelöst und auf 0-5° C gekühlt. 4,3 g (0,2 mol) 4-Nitrophenoxyessigsäurechlorid wurden zugefügt und dann wurde 1 h gerührt. Nach Zugabe von 500 ml Wasser wurde abgesaugt und mit Wasser gewaschen. Der Rückstand wurde in 250 ml Wasser und 250 ml Methanol zum Sieden erhitzt, abgekühlt, abgesaugt und erneut mit Wasser und Methanol gewaschen. Dann wurde mit 350 ml Aceton zum Sieden erhitzt, abgekühlt, abgesaugt, mit Aceton gewaschen und getrocknet.
b.)

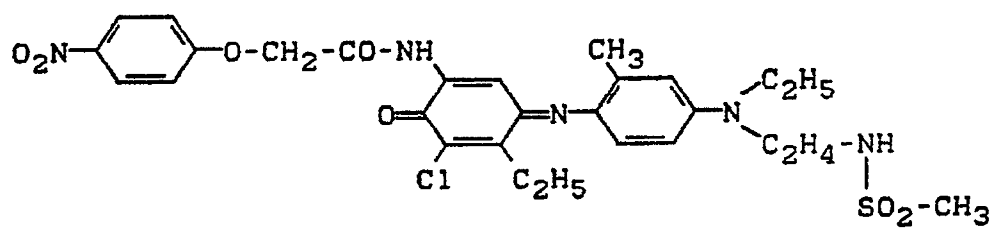

34,6 g (0,09 mol) des unter a.) erhaltenen Produktes und 39,4 g (0,09 mol) 4-Amino-3-methyl-(N-ethyl-N-β-methylsulfonlylaminoethyl-anilin-sulfat wurden in 500 ml Methanol verrührt und mit 135 ml Natriummethanolatlösung 30 %ig (0,73 mol) versetzt. Bei 20-25° C wurde eine Lösung aus 44,5 g (0,19 mol) Ammoniumpersulfat in 100 ml Wasser und 200 ml Methanol zugetropft. Es wurde 1h gerührt, abgesaugt, mit Methanol gewaschen und getrocknet.

c.) Farbabspalter FA-1

16,5 g der unter b.) erhaltenen Verbindung wurden in 300 ml Eisessig verrührt, bis eine homogene Suspension entstanden war. Bei 40-50° C wurden 36 g Zinkstaub in 4 Portionen zugegeben. Nach beendeter Reduktion wurde der Rückstand abgesaugt und mit Eisessig gewaschen. Zu der Eisessiglösung wurden unter Kühlung auf 15-20° C 300 ml 5n Natronlauge langsam zugegeben und 5 mal mit Methylenchlorid (150 ml, 100 ml, 50 ml, 50 ml) ausgeschüttelt. Die Methylenchloridphase wurde mit 1 %iger Natriumdithionitlösung gewaschen, mit Natriumsulfat getrocknet und danach filtriert. Zu dieser Lösung wurde eine Lösung von 16,5 g des Sulfochlorids der Formel

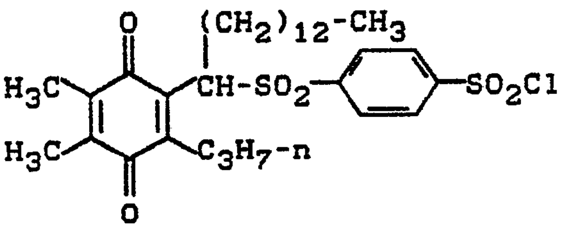

in 70 ml Methylenchlorid und danach 41 ml Pyridin zugesetzt und 1 Stunde gerührt. Dabei oxidierte der als Leukofarbstoff vorliegende Farbstoffrest zum Indoanilinfarbstoff. Nach Entfernen des Lösungsmittels wurde die zurückbleibende Schmiere 2 mal mit Wasser auf dem Dampfbad behandelt, nach Kühlung die entstandenen Klumpen im Wasser zerkleinert, abgesaugt, mit Wasser gewaschen und getrocknet.

28 g des so erhaltenen Rohprodukts wurden an einer Kieselgelsäule mit einer Methylenchlorid/Methanolmischung 97:3 chromatographiert. Die das Produkt enthaltende Fraktion wurde vom Lösungsmittel befreit, der Rückstand mit 120 ml Ethanol ausgekocht, kalt abgesaugt, mit Ethanol gewaschen und getrocknet. Ausbeute: 5,1 g Farbabspalter FA-1.

Die Farbabspalter der vorliegenden Erfindung liefern bei der Entwicklung diffusionsfähige Farbstoffe, die in der Bildempfangsschicht ein blaugrünes Farbbild mit hervorragender Lichtechtheit und Stabilität gegen Wärme, Feuchtigkeit und Alkali ergeben und außerdem gegen Reduktionsmittel weniger empfindlich sind.

Farbfotografische Aufzeichnungsmaterialien zur Herstellung mehrfarbiger Bilder enthalten üblicherweise in räumlicher und spektraler Zuordnung zu den Silberhalogenidemulsionsschichten unterschiedlicher Spektralempfindlichkeit farbgebende Verbindungen, hier besonders Farbabspalter, zur Erzeugung der unterschiedlichen Teilfarbenbilder Cyan, Purpur und Gelb.

Unter räumlicher Zuordnung ist dabei zu verstehen, daß der Farbabspalter sich in einer solchen räumlichen Beziehung zu der Silberhalogenidemulsionsschicht befindet, daß eine Wechselwirkung zwischen ihnen möglich ist, die eine bildgemäße Korrelation zwischen dem bei der Entwicklung gebildeten Silberbild und dem aus dem Farbabspalter erzeugten Farbbild zuläßt. Dies wird in der Regel dadurch erreicht, daß der Farbabspalter in der Silberhalogenidemulsionsschicht selbst enthalten ist oder in einer hierzu benachbarten gegebenenfalls nichtlichtempfindlichen Bindemittelschicht.

Unter spektraler Zuordnung ist zu verstehen, daß die Spektralempfindlichkeit jeder der lichtempfindlichen Silberhalogenidemulsionsschichten und die Farbe des aus dem jeweils räumlich zugeordneten Farbabspalter erzeugten Teilfarbenbildes in einer bestimmten Beziehung zueinander stehen, wobei jeder der Spektralempfindlichkeiten (Rot, Grün, Blau) eine andere Farbe des betreffenden Teilfarbenbildes (im allgemeinen z.B. die Farben Cyan, Purpur bzw. Gelb in dieser Reihenfolge) zugeordnet ist.

Jeder der unterschiedlich spektral sensibilisierten Silberhalogenidemulsionsschichten kann ein oder können auch mehrere Farbabspalter zugeordnet sein. Der erfindungsgemäß verwendete Farbabspalter der Formel II ist vorzugsweise einer rotsensibilisierten Silberhalogenidemulsionsschicht zugeordnet.

Wenn der Farbspalter oxidierbar ist, dann stellt er selbst ein Reduktionsmittel dar, das unmittelbar oder mittelbar unter Mitwirkung von Elektronenübertragungsmitteln (elektron transfer agent, ETA) durch das bildmäßig belichtete Silberhalogenid oxidiert wird. Hierbei entsteht eine bildmäßige Differenzierung hinsichtlich der Fähigkeit, den diffusionsfähigen Farbstoff freizusetzen. Wenn andererseits der Farbabspalter reduzierbar ist, dann verwendet man ihn zweckmäßig in Kombination mit einem in begrenzter Menge vorliegenden Reduktionsmittel, einer sogenannten Elektronendonorverbindung oder einer Elektronendonorvorläuferverbindung, die in diesem Fall neben dem Farbabspalter und dem lichtempfindlichen Silberhalogenid in der gleichen Bindemittelschicht enthalten ist. Auch im Fall der Verwendung von reduzierbaren Farbabspaltern in Kombination mit Elektronendonorverbindungen kann sich die Mitwirkung von Elektronenübertragungsmitteln als günstig erweisen.

Die in Kombination mit einem reduzierbaren Farbabspalter verwendete Elektronendonorverbindung dient gleichermaßen als Reduktionsmittel für das Silberhalogenid und den Farbabspalter. Dadurch, daß das Silberhalogenid und der Farbabspalter bei der Oxidation der Elektronendonorverbindung gewissermaßen miteinander in Konkurrenz treten, ersteres dem letzteren aber hierbei überlegen ist, wird das vorhandene Silberhalogenid nach Maßgabe einer vorausgegangenen bildmäßigen Belichtung bestimmend für die Bildbereiche, innerhalb derer der Farbabspalter durch die Elektronendonorverbindung in seine reduzierte Form überführt wird.

Die in begrenzter Menge vorliegende Elektronendonorverbindung wird unter den Bedingungen der Entwicklung nach Maßgabe des Ausmaßes der Belichtung unter der katalytischen Wirkung der durch Belichtung in dem Silberhalogenid erzeugten Latentbildkeime durch das lichtempfindliche Silberhalogenid oxidiert und steht folglich nicht mehr für eine Reaktion mit dem Farbabspalter zur Verfügung. Hierbei entsteht gleichsam eine bildmäßige Verteilung an nicht verbrauchter Elektronendonorverbindung.

Als Elektronendonorverbindung sind beispielsweise nicht oder nur wenig diffundierende Derivate des Hydrochinons, des Benzisoxazolons, des p-Aminophenols oder der Ascorbinsäure (z.B. Ascorbylpalmitat) beschrieben worden (DE-A-28 09 716).

Weitere Beispiele für Elektronendonorverbindungen sind aus DE-A-29 47 425, DE-A-30 06 268, DE-A-31 30 842, DE-A-31 44-037, DE-A-32 17 877 und EP-A-O 124 915 und Research Disclosure 24 305 (Juli 1984) bekannt. Besonders geeignet sind solche Elektronendonorverbindungen, die erst unter den Bedingungen der Entwicklung in der Schicht aus entsprechenden Elektronendonorvorläuferverbindungen gebildet werden, d.h. Elektr onendonorverbindungen, die in dem Aufzeichnungsmaterial vor der Entwicklung nur in einer verkappten Form vorliegen, in der sie praktisch unwirksam sind. Unter den Bedingungen der Entwicklung werden dann die zunächst unwirksamen Elektronendonorverbindungen in ihre wirksame Form überführt, indem beispielsweise bestimmte Schutzgruppen hydrolytisch abgespalten werden. Im vorliegenden Fall werden auch die erwähnten Elektronendonorvorläuferverbindungen als Elektronendonorverbindung verstanden.

Obwohl für Einarbeitung der erfindungsgemäßen Farbabspalter die verschiedensten Methoden in Frage kommen, hat es sich als günstig erwiesen, die Farbabspalter der vorliegenden Erfindung in Form von Emulgaten unter Verwendung von sogenannten Ölbildnern in die Schichten einzuverleiben. Insbesondere bei Verwendung von reduzierbaren, reduktiv spaltbaren Farbabspaltern in Kombination mit ED-Verbindungen bietet dies den Vorteil, daß Farbabspalter und ED-Verbindungen in Form eines gemeinsamen Emulgates in besonders engen funktionellen Kontakt gebracht werden kön nen. Geeignete Ölbildner sind beispielsweise beschrieben in US-A-2 322 027, DE-A-1 772 192, DE-A-2 042 659 und DE-A-2 049 689. Die optimalen Mengen des einzuarbeitenden Farbabspalters und gegebenenfalls der ED-Verbindung können durch einfache routinemäßige Tests ermittelt werden. Der Farbabspalter der vorliegenden Erfindung wird beispielsweise in Mengen von 0,05 - 0,2 mol und die ED-Verbindung, falls vorhanden, in Mengen von 0,1 - 0,6 mol pro mol Silberhalogenid verwendet.

Als lichtempfindliche Silberhalogenidemulsionen eignen sich Emulsionen von Silberchlorid, Silberbromid oder Gemischen davon, evtl. mit einem geringen Gehalt an Silberiodid bis zu 10 mol-% in einem der üblicherweise verwendeten hydrophilen Bindemittel. Die Emulsionen können desweiteren, insbesondere wenn es sich um wärmeentwickelbare farbfotografische Aufzeichnungsmaterialien handelt, zusätzlich zu dem lichtempfindlichen Silberhalogenid organische oder auch anorganische Silbersalze enthalten, die im wesentlichen nicht lichtempfindlich oder sehr viel weniger empfindlich als das Silberhalogenid sind. Geeignete organische Silbersalze sind beispielsweise solche von Carbonsäuren wie Silberbehenat oder von Iminoverbindungen wie Silberbenzotriazolat. Als Bindemittel für die fotografischen Schichten wird vorzugsweise Gelatine verwendet. Diese kann jedoch ganz oder teilweise durch andere natürliche oder synthetische Bindemittel ersetzt werden.

Die Emulsionen können in der üblichen Weise chemisch und/oder spektral sensibilisiert sein; sie können auch durch geeignete Zusätze stabilisiert sein. Geeignete chemische Sensibilisatoren, spektrale Sensibilisierungsfarbstoffe und Stabilisatoren sind beispielsweise in Research Disclosure 17643 beschrieben; verwiesen wird insbesondere auf die Kapitel III, IV und VI.

Als Schutzkolloid bzw. Bindemittel für die Schichten des Aufzeichnungsmaterials sind die üblichen hydrophilen filmbildenden Mittel natürlicher oder synthetischer Herkunft geeignet, z.B. Proteine, insbesondere Gelatine. Begußhilfsmittel und Weichmacher können verwendet werden. Verwiesen wird auf Research Disclosure 17643, Kapitel IX, XI und XII.

Die Bindemittelschichten können in der üblichen Weise gehärtet werden, wobei als Härtungsmittel Verbindungen verwendet werden, die mit den reaktiven Gruppen des verwendeten Bindemittels, wie Aminogruppen, Carbonylgruppen oder aktive Methylengruppen, unter Vernetzung des Bindemittels reagieren. Beispiele hierfür sind Formaldehyd, Dialdehyde, α-Diketone, Verbindungen mit aktiven Halogenatomen, Verbindungen mit Oxiran- oder Aziridingruppen, Verbindungen mit aktiven Vinylgruppen wie Acryloylgruppen oder Vinylsulfongruppen, sowie auch die sogenannte carboxylgruppenaktivierenden Härter, wie Isoxazoliumsalze, Formadiniumsalze, Carbodiimidverbindungen, Carbamoylpyridiniumsalze und Carbamoyloxypyridiniumsalze. Verwiesen wird auf Research Disclosure 17 643, Kapitel X. Die Härter können einzeln oder im Gemisch verwendet werden.

Die Enwicklung des bildmäßig belichteten erfindungsgemäßen farbfotografischen Aufzeichnungsmaterials kann durch Behandlung mit einer wäßrig-alkalischen, gegebenenfalls hochviskosen Entwicklerlösung eingeleitet werden. Die für die Entwicklung erforderlichen Hilfsentwicklerverbindungen sind dann entweder in der Entwicklerlösung enthalten oder können ganz oder teilweise auch in einer oder mehreren Schichten des erfindungsgemäßen farbfotografischen Aufzeichnungsmaterials enthalten sein. Bei der Entwicklung werden aus den Farbabspaltern bildmäßig diffusionsfähige Farbstoffe freigesetzt und können dann auf eine Bildempfangsschicht übertragen werden, die entweder integraler Bestandteil des erfindungsgemäßen farbfotografischen Aufzeichnungsmaterials ist oder sich mit jenem zumindest während der Entwicklungszeit in Kontakt befindet. Die Bildempfangsschicht kann demnach auf dem gleichen Schichtträger angeordnet sein wie das lichtempfindliche Element oder auf einem separaten Schichtträger. Sie besteht im wesentlichen aus einem Bindemittel, das Beizmittel für die Festlegung der aus den nicht-diffundierenden Farbabspaltern freigesetzten diffusionsfähigen Farbstoffe enthält. Als Beizmittel für anionische Farbstoffe dienen vorzugsweise langkettige quaternäre Ammonium- oder Phosphoniumverbindungen, z.B. solche, wie sie beschrieben sind in US-A-3 271 147 und US-A-3 271 148. Ferner können auch bestimmte Metallsalze und deren Hydroxide, die mit den sauren Farbstoffen schwerlösliche Verbindungen bilden, verwandt werden. Weiterhin sind hier auch polymere Beizmittel zu erwähnen, wie etwa solche, die in DE-A-23 15 304, DE-A-26 31 521 oder DE-A-29 41 818 beschrieben sind. Die Farbstoffbeizmittel sind in der Beizmittel schicht in einem der üblichen hydrophilen Bindemittel dispergiert, z.B. in Gelatine, Polyvinylpyrrolidon, ganz oder partiell hydrolysierten Celluloseestern. Selbstverständlich können auch manche Bindemittel als Beizmittel fungieren, z.B. Polymerisate von stickstoffhaltigen, gegebenenfalls quaternären Basen, wie etwa von N-Methyl-4-Vinylpyridin, 4-Vinylpyridin, 1-Vinylimidazol, wie beispielsweise beschrieben in US-A-2 484 430. Weitere brauchbare beizende Bindemittel sind beispielsweise Guanylhydrazonderivate von Alkylvinylketonpolymerisaten, wie beispielsweise beschrieben in der US-A-2 882 156, oder Guanylhydrazonderivate von Acylstyrol-polymerisaten, wie beispielsweise beschrieben in DE-A-20 09 498. Im allgemeinen wird man jedoch den zuletzt genannten beizenden Bindemitteln andere Bindemittel, z.B. Gelatine, zusetzen.

Sofern die Bildempfangsschicht auch nach vollendeter Entwicklung in Schichtkontakt mit dem lichtempfindlichen Element verbleibt, befindet sich zwischen ihnen in der Regel eine alkalidurchlässige pigmenthaltige lichtreflektierende Bindemittelschicht, die der optischen Trennung zwischen Negativ und Positiv und als ästhethisch ansprechender Bildhintergrund für das übertragene Farbbild dient. Eine solche lichtreflektierende Schicht kann in bekannter Weise bereits in dem lichtempfindlichen farbfotografischen Aufzeichnungsmaterial vorgebildet sein oder aber in ebenfalls bekannter Weise erst bei der Entwicklung erzeugt werden. Falls die Bildempfangsschicht zwischen Schichtträger und lichtempfindlichem Element angeordnet ist und von letzerem durch eine vorgebildete lichtreflektierende Schicht getrennt ist, muß entweder der Schichtträger transparent sein, so daß das erzeugte Farbübertragsbild durch ihn hindurch betrachtet werden kann, oder das lichtempfindliche Element muß mitsamt der lichtreflektierenden Schicht von der Bildempfangsschicht entfernt werden, um letztere freizulegen. Die Bildempfangsschicht kann aber auch als oberste Schicht in einem integralen farbfotografischen Aufzeichnungsmaterial vorhanden sein, in welch letzerem Fall die Belichtung zweckmäßigerweise durch den transparenten Schichtträger vorgenommen wird.

Nach der Verarbeitung enthält die Bildempfangsschicht eine bildmäßige Verteilung von blaugrünen Monoazofarbstoffen der Formel I. Auch der zu der ursprünglich lichtempfindlichen Silberhalogenidemulsionsschicht zugeordnete Farbabspalter der Formel II liegt nach der Verarbeitung in bildmäßiger Verteilung komplementär zu dem übertragenen Farbstoffbild vor und kann in bekannter Weise ebenfalls als Farbbild nutzbar gemacht werden (retained image).

In einer anderen Ausführungsform kann das farbfotografische Aufzeichnungsmaterial nach vorliegender Erfindung auch als wärmeentwickelbares Aufzeichnungsmaterial ausgestaltet sein. In diesem Fall wird die Entwicklung durch Wärmebehandlung eingeleitet, während eine Behandlung mit wäßrigen Bädern im allgemeinen entfällt. Demensprechend sind bei dieser Ausgestaltung die für die Entwicklung erforderlichen Reagentien in einer oder mehreren Schichten des Aufzeichnungsmaterials enthalten. Dies betrifft insbesondere Entwicklungsmittel, Basen oder Basenvorläufer sowie sogenannte thermische Lösungsmittel oder Schmelzbildner. Verwiesen wird auf Research Disclosure 17029 (Juni 1978).

Die Entwicklung des bildmäßig belichteten erfindungsgemäßen farbfotografischen Aufzeichnungsmaterials umfaßt beispielsweise im Falle des Wärmeentwicklungsverfahrens die Teilschritte Silberhalogenidentwicklung, Erzeugung einer bildmäßigen Verteilung diffusionsfähiger Farbstoffe und Diffusionsübertragung dieser bildmäßigen Verteilung in die Bildempfangsschicht. Sie wird dadurch eingeleitet, daß man das belichtete Aufzeichnungsmaterial einer Wärmebehandlung unterzieht, bei der die lichtempfindliche Bindemittelschicht für eine Zeit von etwa 0,5 bis 300 s auf eine erhöhte Temperatur, z.B. im Bereich von 80 bis 250° C, gebracht wird. Hierdurch werden in dem Aufzeichnungsmaterial geeignete Bedingungen für die Entwicklungsvorgänge einschließlich der Farbstoffdiffusion geschaffen, ohne daß es der Zufuhr eines flüssigen Mediums, z.B. in Form eines Entwicklerbades bedarf. Bei der Entwicklung werden aus den Farbabspaltern bildmäßig diffusionsfähige Farbstoffe freigesetzt und auf eine Bildempfangsschicht übertragen, die entweder integraler Bestandteil des erfindungsgemäßen farbfotografischen Aufzeichnungsmaterials ist oder sich mit jenem zumindest während der Entwicklungszeit in Kontakt befindet.

Hierbei finden in einem Einschritt-Entwicklungsprozeß bildmäßige Silberentwicklung, Farbstofffreisetzung und Farbtransfer synchron statt.

Darüber hinaus kann die Farbbilderzeugung mit dem erfindungsgemäßen farbfotografischen Aufzeichnungsmaterial auch in einem Zweischritt-Entwicklungsprozeß erfolgen, wobei in einem ersten Schritt bei Temperaturen zwischen 80 und 250° C die Silberhalogenidentwicklung und Farb stofffreisetzung stattfindet, worauf in einem zweiten Schritt die Farbbildübertragung aus dem lichtempfindlichen Teil auf einen damit in Kontakt gebrachten Bildempfangsteil erfolgt, z.B. durch Erhitzen auf eine Temperatur zwischen 50 und 150° C, vorzugsweise auf 70 bis 90° C, wobei in diesem Fall vor dem Laminieren von lichtempfindlichem Teil und Bildempfangsteil noch Diffusionshilfsmittel (Lösungsmittel), wie z.B. Wasser, extern angetragen werden können.

Beispiel 1

Der erfindungsgemäße Farbstoff C-2 (Modellfarbstoff) und der nicht erfindungsgemäße Farbstoff V-1 der folgenden Formel

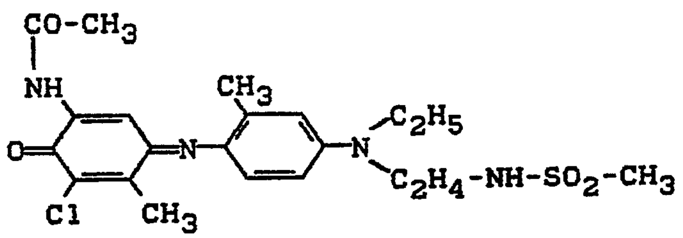

V-1

wurden jeder für sich wenig Methylethylketon gelöst und dann bei 20° C mit überschüssiger 1N KOH versetzt. Hierbei wird der Farbstoff allmählich zerstört, was anhand der Abnahme der Farbdichte verfolgt werden kann. Für die Halbwertzeit $t_{1/2}$ des Farbstoffzerfalls, gemessen bei den Absorptionsmaxima, wurden folgende Werte gefunden:

| | $\lambda_{max}$ [nm] | $t_{1/2}$ [min] |
|---|---|---|
| Farbstoff C-2 | 676 | 24 |
| Farbstoff V-1 | 668 | 13 |

Das bedeutet, der erfindungsgemäße Farbstoff ist um fast den Faktor 2 hydrolysestabiler. Unter den für Farbdiffusionsverfahren üblichen Verarbeitungsbedingungen ist bei den erfindungsgemäßen Blaugrünfarbstoffen ein spürbarer Farbstoffabbau nicht zu befürchten.

Beispiel 2

Ein fotografisches Aufzeichnungsmaterial gemäß der Erfindung bestehend aus einem lichtempfindlichen Teil (A) und einem Bildempfangsteil (B) wurde wie folgt hergestellt. Die Mengenangaben beziehen sich dabei jeweils auf 1 m²:

Teil A besteht aus einem Polyethylenterephthalatträger, auf den nacheinander folgende Schichten aufgetragen waren:

1. Eine lichtempfindliche, rotsensibilisierte Silberbromidemulsion aus 0,5 g $AgNO_3$ und mit einem lichtunempfindlichen organischen Silbersalz in der Form von Silberbenzotriazolat entsprechend 0,5 g $AgNO_3$, zusammen mit 0,648 g des erfindungsgemäßen Farbabspalters FA-1, 0,283 g der Verbindung ED-1 (Elektronendonorverbindung), 0,931 g Palmitinsäurediethylamid und 0,931 g Gelatine.
2. Eine Hilfsschicht mit 1,5 g Guanidintrichloracetat, 0,24 g 4-hydroxymethyl-4-methyl-phenidon, 0,028 g der Verbindung der Formel

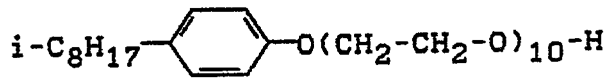

und 1,5 g Gelatine.

3. Eine Härtungsschicht bestehend aus einem Soforthärter und 0,5 g Gelatine.

Teil B besteht aus einem mit Polyethylen beschichteten Träger mit der Schichtenfolge:

1. Eine Beizschicht mit 3,0 g eines zu 5 % mit Chlorethanol quaternierten Polyvinylimidazols und 3 g Gelatine.

2. Eine Deckschicht mit 1 g Gelatine und 0,35 g Dimethylolharnstoff.

Das lichtempfindliche Material wurde hinter einem Graukeil belichtet und für 1 min auf 120° C gleichmäßig erhitzt. Anschließend wurde dieses Element schichtseitig auflaminiert auf den Bildempfangsteil B, der vorher 10 s in Wasser gequollen worden war, und 2 min bei 70° C in Kontakt gehalten. Danach wurde das Farbstoffempfangsblatt vom lichtempfindlichen Teil abgetrennt.

Zum Vergleich wurde ein lichtempfindlicher Teil entsprechend dem Stande der Technik hergestellt, der anstelle des erfindungsgemäßen Farbabspalters FA-1 0,33 g des Farbabspalters V-2 (nicht erfindungsgemäß) enthielt. Die beiden erhaltenen Blaugrünkeile wurden bezüglich Farbbrillanz und Lichtstabilität geprüft.

| Nebenfarbdichten (normiert auf bg-Dichte = 1,0) | | |
|---|---|---|
| erfindungsgemäß | gelb: 0,26 | purpur: 0,44 |
| Vergleich | gelb: 0,28 | purpur: 0,48 |
| Farbdichterückgang bei Dichte 0,5 nach $10^7$ Lx · h | | |
| erfindungsgemäß: 17%; Vergleich 57% | | |

Die erfindungsgemäße Verbindung liefert also einen Farbstoff, der bei mindestens gleicher Farbbrillanz wesentlich höhere Lichtstabilität aufweist.

ED-1

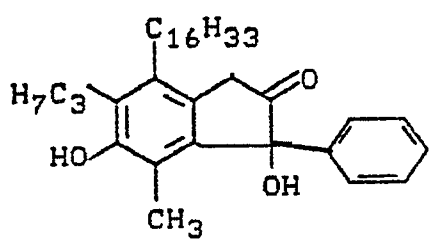

Farbabspalter V-2

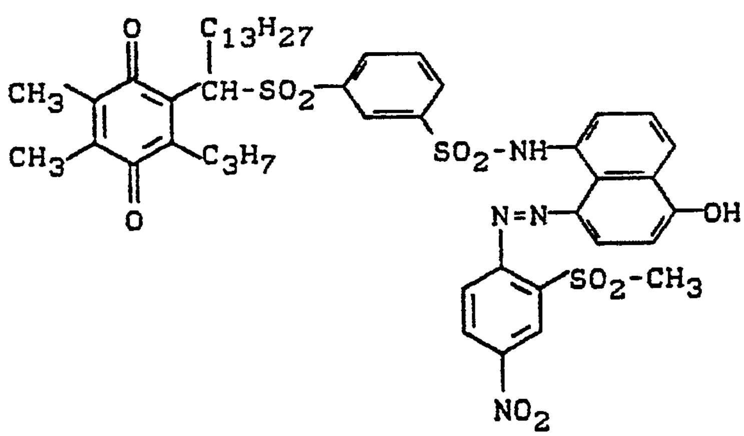

Beispiel 3

Nach den Angaben von Beispiel 2 wurde der lichtempfindliche Teil eines Aufzeichnungsmaterials hergestellt, der jedoch in der Schicht 2 kein Guanidintrichloracetat enthielt.

Nach Belichtung wurde dieser lichtempfindliche Teil mit einem wie in Beispiel 2 hergestellten Bildempfangsblatt, das jedoch zuvor 1 min mit einer 4 %igen wäßrigen NaOH- Lösung gequollen worden war, beschichtungsseitig zusammenlaminiert. Nach einer Kontaktzeit von 2 min bei 30° C wurden die Blätter voneinander getrennt. Im Bildempfangsblatt wurde ein farbbrillanter bildmäßiger Übertrag des Farbtoffes erhalten.

Dies beweist, daß der erfindungsgemäße Farbstoff auch bei Verarbeitung mit wäßrigem Alkali volle Farbdichte und Farbbrillanz erreicht, ohne durch Hydrolyse zerstört zu werden.

**Patentansprüche**

1. Farbfotografisches Aufzeichnungsmaterial für die Herstellung farbiger Bilder nach dem Farbdiffusionsübertragungsverfahren, das zugeordnet zu mindestens einer lichtempfindlichen Silberhalogenidemulsionsschicht eine nicht diffundierende farbgebende Verbindung (Farbabspalter) enthält, aus der unter den Bedingungen der alkalischen Entwicklung als Funktion der Entwicklung der Silberhalogenidemulsionsschicht ein diffusionsfähiger Farbstoff freigesetzt wird, dadurch gekennzeichnet, daß der Farbstoff der folgenden Formel I entspricht:

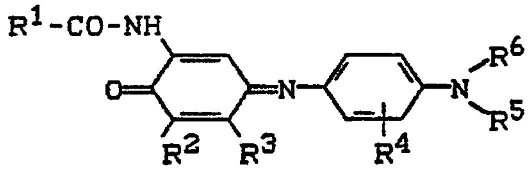

I

worin bedeuten

$R^1$ Alkyl, Aryl, Arylamino, Alkoxy, Aryloxy;

$R^2$ H, Halogen;

$R^3$ Alkyl mit 2-4 C-Atomen;

$R^4$ H oder einen oder mehrere Substituenten wie Alkyl, Alkoxy, Acylamino, Halogen, einschließlich eines Substituenten in ortho-Stellung zur Gruppe

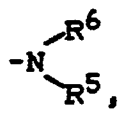

der zusammen mit $R^5$ eine cyclische Aminogruppe vervollständigt;

$R^5$ Alkyl mit bis zu 4 C-Atomen, oder einen Rest, der zusammen mit einem durch $R^4$ dargestellten Substituenten oder zusammen mit $R^6$ eine cyclische Aminogruppe vervollständigt

$R^6$ Alkyl mit bis zu 4 C-Atomen, oder einen Rest, der zusammen mit $R^5$ eine cyclische Aminogruppe vervollständigt.

2. Aufzeichnungsmaterial nach Anspruch 1, dadurch gekennzeichnet, daß mindestens einer lichtempfindlichen Silberhalogenidemulsionsschicht eine Verbindung der folgenden Formel II zugeordnet ist

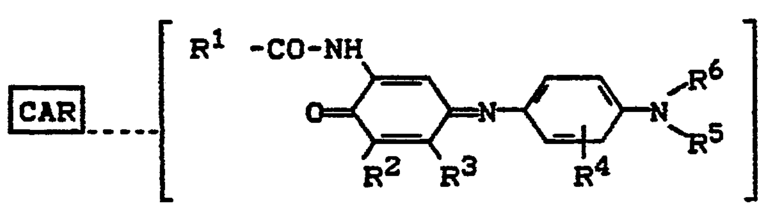

II

worin bedeuten

$R^1$ Alkyl, Aryl, Arylamino, Alkoxy, Aryloxy;

$R^2$ H, Halogen;

$R^3$ Alkyl mit 2-4 C-Atomen;

$R^4$ H oder einen oder mehrere Substituenten wie Alkyl, Alkoxy, Acylamino, Halogen, einschließlich eines Substituenten in ortho-Stellung zur Gruppe

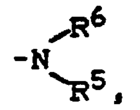

der zusammen mit $R^5$ eine cyclische Aminogruppe vervollständigt;
$R^5$ Alkyl mit bis zu 4 C-Atomen, oder einen Rest, der zusammen mit einem durch $R^4$ dargestellten Substituenten oder zusammen mit $R^6$ eine cyclische Aminogruppe vervollständigt
$R^6$ Alkyl mit bis zu 4 C-Atomen, oder einen Rest, der zusammen mit $R^5$ eine cyclische Aminogruppe vervollständigt;
CAR einen mindestens eine diffusionsfestmachende Gruppe enthaltenden Trägerrest;
und worin die gestrichelte Linie eine mögliche Verknüpfung kennzeichnet.

3. Verfahren zur Erzeugung einer bildmäßigen Verteilung eines blaugrünen Farbstoffes, bei dem ein farbfotografisches Aufzeichnungsmaterial, das zugeordnet zu einer Silberhalogenidemulsionsschicht einen Farbabspalter enthält, bildmäßig belichtet und entwickelt wird zur Erzeugung einer bildmäßigen Verteilung eines diffusionsfähigen Farbstoffes und bei dem der diffusionsfähige Farbstoff in eine Bildempfangsschicht übertragen wird, dadurch gekennzeichnet, daß der diffusionsfähige Farbstoff der folgenden Formel entspricht:

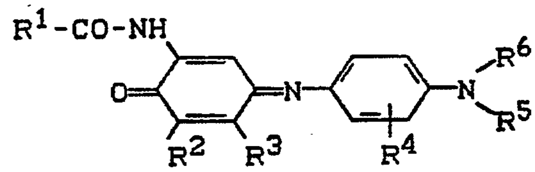 I

worin bedeuten
$R^1$ Alkyl, Aryl, Arylamino, Alkoxy, Aryloxy;
$R^2$ H, Halogen;
$R^3$ Alkyl mit 2-4 C-Atomen;
$R^4$ H oder einen oder mehrere Substituenten wie Alkyl, Alkoxy, Acylamino, Halogen, einschließlich eines Substituenten in ortho-Stellung zur Gruppe

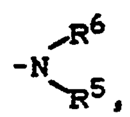

der zusammen mit $R^5$ eine cyclische Aminogruppe vorvollständigt;
$R^5$ Alkyl mit bis zu 4 C-Atomen, oder einen Rest, der zusammen mit einem durch $R^4$ dargestellten Substituenten oder zusammen mit $R^6$ eine cyclische Aminogruppe vervollständigt;
$R^6$ Alkyl mit bis zu 4 C-Atomen, oder einen Rest, der zusammen mit $R^5$ eine cyclische Aminogruppe vervollständigt.

4. Verfahren nach Anspruch 3, dadurch gekennzeichnet, daß die Entwicklung durch Erwärmen bewirkt wird.

5. Fotografisch hergestelltes Farbbild, gekennzeichnet durch eine bildmäßige Verteilung eines Farbstoffes einer der folgenden allgemeinen Formeln I und II

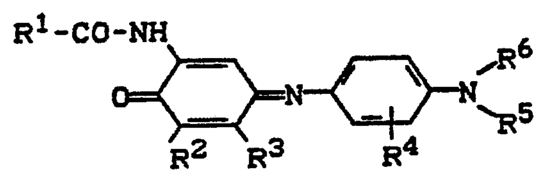 I

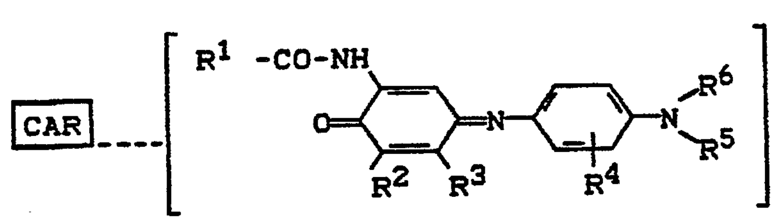 II

worin bedeuten

$R^1$ Alkyl, Aryl, Arylamino, Alkoxy, Aryloxy;

$R^2$ H, Halogen:

$R^3$ Alkyl mit 2-4 C-Atomen;

$R^4$ H oder einen oder mehrere Substituenten wie Alkyl, Alkoxy, Acylamino, einschließlich eines Substituenten in ortho-Stellung zur Gruppe

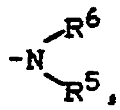

der zusammen mit $R^5$ eine cyclische Aminogruppe vervollständigt;

$R^5$ Alkyl mit bis zu 4 C-Atomen, oder einen Rest, der zusammen mit einem durch $R^4$ dargestellten Substituenten oder zusammen mit $R^6$ eine cyclische Aminogruppe vervollständigt;

$R^6$ Alkyl mit bis zu 4 C-Atomen, oder einen Rest, der zusammen mit $R^5$ eine cyclische Aminogruppe vervollständigt;

CAR einen mindestens eine diffusionsfestmachende Gruppe enthaltende Trägerrest;

und worin die gestrichelte Linie eine mögliche Verknüpfung kennzeichnet.

## Claims

1. A colour photographic recording material for the production of coloured images by the dye diffusion transfer process which contains, in association with at least one photosensitive silver halide emulsion layer, a nondiffusing dye-producing compound (dye donor) from which a diffusible dye is released under the alkaline development conditions as a function of the development of the silver halide emulsion layer, characterized in that the dye corresponds to formula I

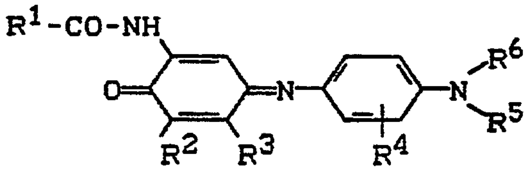

I

in which

$R^1$ represents alkyl, aryl, arylamino, alkoxy, aryloxy;

$R^2$ represents H, halogen;

$R^3$ represents $C_{2-4}$ alkyl;

$R^4$ represents H or one or more substituents, such as alkyl, alkoxy, acylamino, halogen, including a substituent in the ortho position to the group

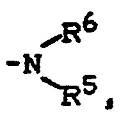

which, together with $R^5$, completes a cyclic amino group;

$R^5$ represents alkyl containing up to 4 C atoms or a group which, together with a substituent represent by $R^4$ or together with $R^6$, completes a cyclic amino group;

$R^6$ represents alkyl containing up to 4 C atoms or a group which, together with $R^5$, completes a cyclic amino group.

2. A recording material as claimed in claim 1, characterized in that a compound corresponding to formula II

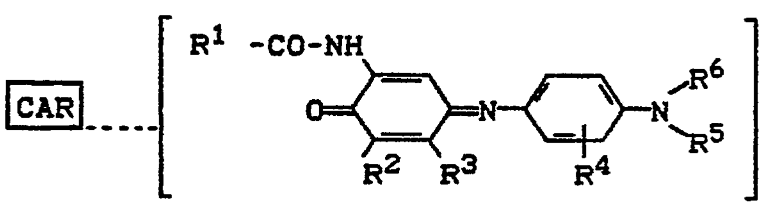

II

in which

$R_1$ represents alkyl, aryl, arylamino, alkoxy, aryloxy;
$R_2$ represents H, halogen;
$R_3$ represents $C_{2-4}$ alkyl;
$R_4$ represents H or one or more substituents, such as alkyl, alkoxy, acylamino, halogen, including a substituent in the ortho position to the group

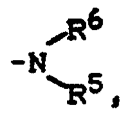

which, together with $R^5$, completes a cyclic amino group;
$R^5$ represents alkyl containing up to 4 C atoms or a group which, together with a substituent represent by $R^4$ or together with $R^6$, completes a cyclic amino group;
$R^6$ represents alkyl containing up to 4 C atoms or a group which, together with $R^5$, completes a cyclic amino group;
CAR represents a carrier group containing at least one group imparting resistance to diffusion;
and in which the chain line represents a possible linkage, is associated with at least one photosensitive silver halide emulsion layer.

3. A process for producing an imagewise distribution of a cyan dye, in which a colour photographic recording material containing a dye donor in associated with a silver halide emulsion layer is exposed to form an image and developed for producing an imagewise distribution of a diffusible dye and in which the diffusible dye is transferred to an image-receiving layer, characterized in that the diffusible dye corresponds to the following formula

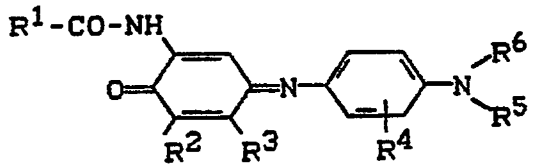
I

in which
$R^1$ represents alkyl, aryl, arylamino, alkoxy, aryloxy;
$R^2$ represents H, halogen;
$R^3$ represents $C_{2-4}$ alkyl;
$R^4$ represents H or one or more substituents, such as alkyl, alkoxy, acylamino, halogen, including a substituent in the ortho position to the group

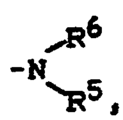

which, together with $R^5$, completes a cyclic amino group;
$R^5$ represents alkyl containing up to 4 C atoms or a group which, together with a substituent represent by $R^4$ or together with $R^6$, completes a cyclic amino group;
$R^6$ represents alkyl containing up to 4 C atoms or a group which, together with $R^5$, completes a cyclic amino group.

4. A process as claimed in claim 3, characterized in that development is carried out by heating.

5. A photographically produced dye image, characterized by an imagewise distribution of a dye corresponding to either of general formulae I and II below

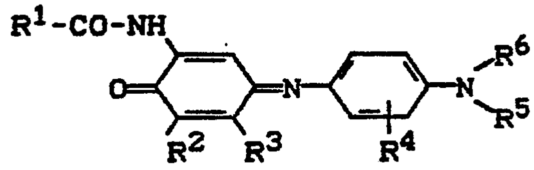

I

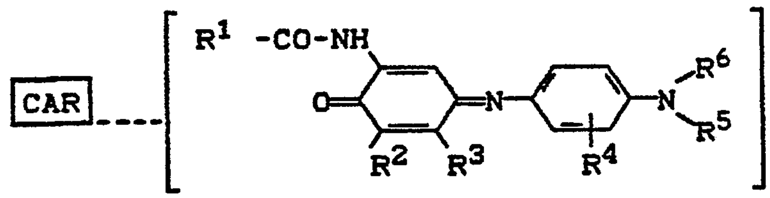

II

in which

$R^1$ represents alkyl, aryl, arylamino, alkoxy, aryloxy;

$R^2$ represents H, halogen;

$R^3$ represents $C_{2-4}$ alkyl;

$R^4$ represents H or one or more substituents, such as alkyl, alkoxy, acylamino, halogen, including a substituent in the ortho position to the group

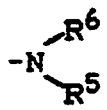,

which, together with $R^5$, completes a cyclic amino group;

$R^5$ represents alkyl containing up to 4 C atoms or a group which, together with a substituent represent by $R^4$ or together with $R^6$, completes a cyclic amino group; $R^6$ represents alkyl containing up to 4 C atoms or a group which, together with $R^5$, completes a cyclic amino group:

CAR represents a carrier group containing at least one group imparting resistance to diffusion;

and in which the chain line represents a possible linkage.

**Revendications**

1. Support d'enregistrement pour photographie couleur destiné à produire des images de couleur par le procédé de transfert par diffusion de couleur, qui contient, en association avec au moins une couche photosensible d'émulsion à l'halogénure d'argent, un composé chromogène non diffusible (chromogène) duquel est libéré un colorant diffusible dans les conditions du développement alcalin comme fonction du développement de la couche d'émulsion à l'halogénure d'argent, caractérisé en ce que le colorant répond à la formule I suivante

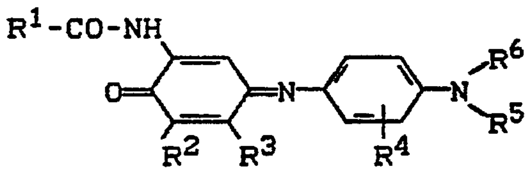

I

dans laquelle

$R^1$ est un groupe alkyle, aryle, arylamino, alkoxy, aryloxy;

$R^2$ représente H ou un halogène,

$R^3$ est un groupe alkyle ayant 2 à 4 atomes de carbone;

$R^4$ représente H ou un ou plusieurs substituants tels qu'alkyle, alkoxy, acylamino, halogéno, y compris un substituant en position ortho par rapport au groupe

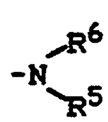,

qui complète conjointement avec $R^5$ un groupe amino cyclique;

$R^5$ est un groupe alkyle ayant jusqu'à 4 atomes de carbone ou un reste qui complète un groupe amino cyclique conjointement avec un substituant représenté par $R_4$ ou conjointement avec $R^6$;
$R^6$ est un groupe alkyle ayant jusqu'à 4 atomes de carbone ou un reste qui complète un groupe amino cyclique conjointement avec $R^5$.

2. Support d'enregistrement suivant la revendication 1, caractérisé par l'adjonction, à au moins une couche photosensible d'émulsion à l'halogénure d'argent, d'un composé de formule II suivante

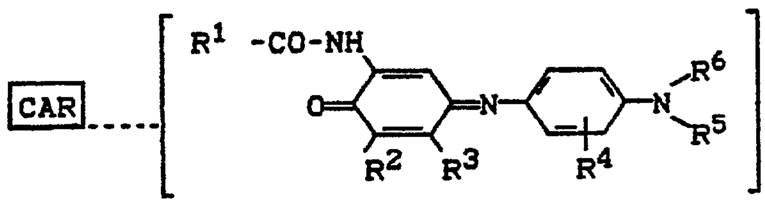

II

dans laquelle
$R^1$ est un groupe alkyle, aryle, arylamino, alkoxy, aryloxy;
$R^2$ est l'hydrogène ou un halogène;
$R^3$ est un groupe alkyle ayant 2 à 4 atomes de carbone;
$R^4$ représente l'hydrogène ou un ou plusieurs substituants tels qu'alkyle, alkoxy, acylamino, halogéno, y compris un substituant en position ortho par rapport au groupe

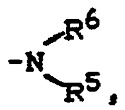

qui complète un groupe amino cyclique conjointement avec $R^5$;
$R^5$ est un groupe alkyle ayant jusqu'à 4 atomes de carbone ou un reste qui complète un groupe amino cyclique conjointement avec un substituant représenté par $R^4$ ou conjointement avec $R^6$;
$R^6$ est un groupe alkyle ayant jusqu'à 4 atomes de carbone ou un reste qui complète un groupe amino cyclique conjointement avec $R^5$;
CAR désigne un reste porteur contenant au moins un groupe conférant le caractère non diffusible; et le segment en traits interrompus caractérise une liaison possible.

3. Procédé pour produire une répartition conforme à l'image d'un colorant cyan, dans lequel un support d'enregistrement pour la photographie couleur, qui contient un chromogène en association avec une couche d'émulsion à l'halogénure d'argent, est exposé et développé conformément à l'image pour la production d'une répartition selon l'image d'un colorant diffusible et dans lequel le colorant diffusible est transféré dans une couche réceptrice d'image, caractérisé en ce que le colorant diffusible répond à la formule suivante :

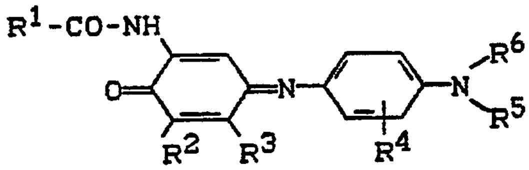

I

dans laquelle
$R^1$ un groupe alkyle, aryle, arylamino, alkoxy, aryloxy;
$R^2$ est l'hydrogène ou un halogène;
$R^3$ est un groupe alkyle ayant 2 à 4 atomes de carbone;
$R^4$ représente l'hydrogène ou un ou plusieurs substituants tels qu'alkyle, alkoxy, acylamino, halogéno, y compris un substituant en position ortho par rapport au groupe

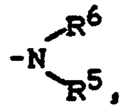

qui complète un groupe amino cyclique conjointement avec $R^5$;
$R^5$ est un groupe alkyle ayant jusqu'à 4 atomes de carbone ou un reste qui complète un groupe amino cyclique conjointement avec un substituant représenté par $R^4$ ou conjointement avec $R^6$;
$R^6$ est un groupe alkyle ayant jusqu'à 4 atomes de carbone ou un reste qui complète un groupe amino cyclique conjointement avec $R^5$.

4. Procédé suivant la revendication 3, caractérisé en ce que le développement est effectué par chauffage.

5. Image couleur produite par photographie, caractérisée par une répartition conforme à l'image d'un colorant répondant à l'une des formules générales I et II suivantes

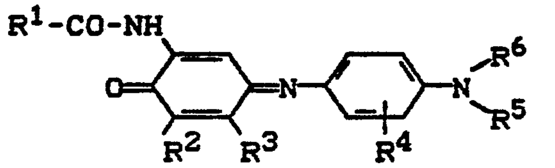

I

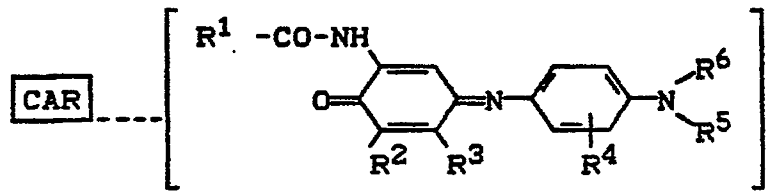

II

dans lesquelles

$R^1$ est un groupe alkyle, aryle, arylamino, alkoxy, aryloxy;

$R^2$ est l'hydrogène ou un halogène;

$R^3$ est un groupe alkyle ayant 2 à 4 atomes de carbone;

$R^4$ est l'hydrogène ou représente un ou plusieurs substituants tels qu'alkyle, alkoxy, acylamino, y compris un substituant en position ortho par rapport au groupe

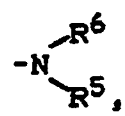

qui complète un groupe amino cyclique conjointement avec $R^5$;

$R^5$ est un groupe alkyle ayant jusqu'à 4 atomes de carbone ou un reste qui complète un groupe amino cyclique conjointement avec un substituant représenté par $R^4$ ou conjointement avec $R^6$;

$R^6$ est un groupe alkyle ayant jusqu'à 4 atomes de carbone ou un reste qui complète un groupe amino cyclique conjointement avec $R^5$;

CAR est un reste porteur contenant au moins un groupe conférant le caractère non diffusible;

et le segment en traits interrompus caractérise une liaison possible.